# EUROPÄISCHE PATENTANMELDUNG

(11) **EP 2 339 245 A2**
(43) Veröffentlichungstag der Anmeldung: **29.06.2011**
(21) Anmeldenummer: 10196172.0
(22) Anmeldetag: 21.12.2010
(51) Int. Cl.: F24D 3/18, F25B 29/00

(54) **Heiz- und Kühleinrichtungen mit einer Wärmepumpe**

(30) Priorität: 23.12.2009 DE 202009017577 U
(71) Anmelder: Waterkotte GmbH, 44628 Heme (DE)
(72) Erfinder: Waterkotte, Klemens Oskar, 44627 Herne (DE)
(74) Vertreter: Linnemann, Winfried

(57) **Zusammenfassung**

Die Erfindung betrifft Heiz- und Kühleinrichtungen (1), mit einer Wärmepumpe (2) mit einem im Heizbetrieb Wärme aus der Umgebung aufnehmenden und im Kühlbetrieb Wärme an die Umgebung abgebenden ersten Fluidkreislauf (3) mit einer ersten Förderpumpe (30) und mit einem im Heizbetrieb Wärme an ein zu beheizendes Gebäude abgebenden und im Kühlbetrieb Wärme aus einem zu kühlenden Gebäude entnehmenden zweiten Fluidkreislauf (4) mit einer zweiten Förderpumpe (40).

Eine erste erfindungsgemäße Lösung ist dadurch gekennzeichnet, dass in beiden Fluidkreisläufen (3 und 4) das gleiche Wärmetransportfluid zirkuliert und dass die beiden Fluidkreisläufe (3 und 4) über eine erste und eine zweite Verbindungsleitung (51, 52) miteinander verbunden sind, wobei die erste Verbindungsleitung (51) stromauf der ersten Förderpumpe (30) von dem ersten Fluidkreislauf (3) abzweigt und stromauf der zweiten Förderpumpe (40) in den zweiten Fluidkreislauf (4) mündet und wobei die zweite Verbindungsleitung (52) stromab der zweiten Förderpumpe (40) von dem zweiten Fluidkreislauf (4) abzweigt und stromab der ersten Förderpumpe (30) in den ersten Fluidkreislauf (3) mündet, wobei wenigstens eine der Verbindungsleitungen (51, 52) absperrbar ist.

Weitere erfindungsgemäße, alternative Lösungen sind im Anspruch 2 und im Anspruch 5 angegeben.

## Beschreibung

Die vorliegende Anmeldung betrifft Heiz- und Kühleinrichtungen mit einer Wärmepumpe mit einem im Heizbetrieb Wärme aus der Umgebung aufnehmenden und im Kühlbetrieb Wärme an die Umgebung abgebenden ersten Fluidkreislauf mit einer ersten Förderpumpe und mit einem im Heizbetrieb Wärme an ein zu beheizendes Gebäude abgebenden und im Kühlbetrieb Wärme aus einem zu kühlenden Gebäude entnehmenden zweiten Fluidkreislauf mit einer zweiten Förderpumpe.

Heiz- und Kühleinrichtungen der eingangs genannten Art sind zum einen aus ihrem praktischen Einsatz bekannt. Dabei wird im Heizbetrieb über ein Wärmetransportfluid im ersten Fluidkreislauf Wärme z.B. aus dem Erdreich oder dem Grundwasser oder der Umgebungsluft der Wärmepumpe zugeführt und in der Wärmepumpe auf ein höheres Temperaturniveau angehoben. Mittels eines Wärmetransportfluids im zweiten Fluidkreislauf wird die Wärme mit dem erhöhten Temperaturniveau einem zu heizenden Gebäude mit einer Fußboden- oder Wand- oder Deckenheizung zugeführt und/oder für eine Brauchwassererwärmung genutzt. In Kühlbetrieb wird mittels des Wärmetransportfluids im zweiten Fluidkreislauf Wärme aus einem zu kühlenden Gebäude aufgenommen, mittels der Wärmepumpe auf einen höheres Temperaturniveau gebracht und mittels des Wärmetransportfluids im ersten Fluidkreislauf an das Erdreich oder das Grundwasser oder die Umgebungsluft abgegeben.

Weiterhin ist aus EP 1 348 920 A2 eine Heiz- und Kühleinrichtung mit einer Wärmepumpe zum gleichzeitigen Kühlen und Heizen bekannt, insbesondere zur Klimatisierung von Gebäuden oder Fahrzeugen. Dabei sind im Kältemittelkreislauf nacheinander folgende Vorrichtungen angeordnet: ein Verdichter, ein erster Wärmetauscher als Verflüssiger, ein Expansionsventil und ein zweiter Wärmetauscher als Verdampfer. Zwischen den zwei Wärmetauschern ist ein dritter Wärmetauscher im Kreislauf in Nachbarschaft zum Expansionsventil angeordnet, der abwechselnd als Verflüssiger und als Verdampfer arbeitet. In der Funktion als Verflüssiger ist das Expansionsventil in Fließrichtung hinter dem dritten Wärmetauscher und in der Funktion als Verdampfer ist das Expansionsventil in Fließrichtung vor dem dritten Wärmetauscher angeordnet. Der dritte Wärmetauscher arbeitet bei größerem Wärmebedarf als Verdampfer und bei größerem Kältebedarf als Verflüssiger; er gibt Wärme an die Umwelt ab oder nimmt Wärme aus der Umwelt auf. Vorzugsweise wird bei der Funktion des dritten Wärmetauschers als Verflüssiger der erste Wärmetauscher außer Betrieb gesetzt und in gleicher Weise wird bevorzugt bei der Funktion des dritten Wärmetauschers als Verdampfer der zweite Wärmetauscher außer Betrieb gesetzt. Zum Außerbetriebsetzen ist mindestens einer der Wärmetauscher und sind insbesondere alle Wärmetauscher jeweils durch einen geschalteten Bypass umgehbar. Außerdem ist bevorzugt vorgesehen, dass vor und hinter dem dritten Wärmetauscher je ein Expansionsventil angeordnet ist, von denen immer nur eines in Funktion ist.

Mit dieser bekannten Einrichtung kann zwar ein Gebäude oder Fahrzeug sowohl geheizt als auch gekühlt werden, jedoch ist die Einrichtung, wie vorstehend beschrieben, technisch relativ aufwändig und dadurch auch relativ teuer in der Herstellung, in der Installation und im Unterhalt.

Für die vorliegende Erfindung stellt sich daher die Aufgabe, Heiz- und Kühleinrichtungen der eingangs genannten Art zu schaffen, die die vorstehend angegebenen Nachteile vermeiden und die technisch einfacher und dadurch kostengünstiger in ihrer Herstellung und ihrem Unterhalt sind und die einfacher installierbar sind.

Eine erste Lösung dieser Aufgabe gelingt erfindungsgemäß mit einer Heiz- und Kühleinrichtung der eingangs genannten Art, die dadurch gekennzeichnet ist, dass in beiden Fluidkreisläufen das gleiche Wärmetransportfluid zirkuliert und dass die beiden Fluidkreisläufe über eine erste und eine zweite Verbindungsleitung miteinander verbunden sind, wobei die erste Verbindungsleitung stromauf der ersten Förderpumpe von dem ersten Fluidkreislauf abzweigt und stromauf der zweiten Förderpumpe in den zweiten Fluidkreislauf mündet, wobei die zweite Verbindungsleitung stromab der zweiten Förderpumpe von dem zweiten Fluidkreislauf abzweigt und stromab der ersten Förderpumpe in den ersten Fluidkreislauf mündet und wobei wenigstens eine der Verbindungsleitungen absperrbar ist.

Diese erste Lösung bietet die vorteilhafte Möglichkeit, die Einrichtung wahlweise als Heizeinrichtung mit aktiver Wärmepumpe oder als Naturkühleinrichtung mit abgeschalteter Wärmepumpe zu betreiben. Im Heizbetrieb arbeitet die Einrichtung wie eine übliche Wärmepumpenheizung, wobei Wärme aus dem Erdreich oder Grundwasser oder der Umgebungsluft entnommen, auf ein höheres Temperaturniveau gehoben und zum Heizen eines Gebäudes und/oder zum Erwärmen von Brauchwasser genutzt wird. Im Naturkühlbetrieb nimmt das Wärmetransportfluid im zweiten Fluidkreislauf Wärme aus dem zu kühlenden Gebäude auf und transportiert in einem Teilstrom die Wärme über die erste Verbindungsleitung unmittelbar in den ersten Fluidkreislauf und damit in das Erdreich oder Grundwasser oder in die Umgebungsluft. Im Erdreich oder Grundwasser oder in der Umgebungsluft wird das Wärmetransportfluid abgekühlt und dann wieder zurückgeführt, wobei ein Teilstrom des abgekühlten Wärmetransportfluids durch die zweite Verbindungsleitung wieder in den zweiten Fluidkreislauf geleitet wird. Für die Naturkühlfunktion benötigt die Einrichtung als zusätzliche Komponenten vorteilhaft also nur zwei Verbindungsleitungen und wenigstens ein Absperrorgan in einer der Verbindungsleitungen. Für diese wenigen zusätzlichen Teile ist nur ein sehr geringer zusätzlicher technischer Aufwand erforderlich, was die Herstellungskosten für diese Heiz- und Kühleinrichtung besonders niedrig hält. Zudem sind die zusätzlichen Teile keine Verschleißteile, was einen zuverlässigen Dauerbetrieb gewährleistet. Im Naturkühlbetrieb läuft nur die Förderpumpe im zweiten Fluidkreislauf, während die Wärmepumpe und die Förderpumpe im ersten Fluidkreislauf nicht aktiv sind, was zu besonders günstigen Betriebskosten führt.

Eine zweite Lösung der Aufgabe gelingt erfindungsgemäß mit einer Heiz- und Kühleinrichtung der eingangs genannten Art, die dadurch gekennzeichnet ist,dass zwischen den beiden Fluidkreisläufen ein Wärmetauscher eingeschaltet ist, dass der erste Fluidkreislauf über eine stromab der ersten Förderpumpe abzweigende und stromauf der ersten Förderpumpe in den ersten Fluidkreislauf mündende erste Zweigleitung mit der einen Seite des Wärmetauschers verbunden ist und dass der zweite Fluidkreislauf über eine stromab der zweiten Förderpumpe abzweigende und stromauf der zweiten Förderpumpe in den zweiten Fluidkreislauf mündende zweite Zweigleitung mit der anderen Seite des Wärmetauschers verbunden ist, wobei die erste und/oder die zweite Zweigleitung absperrbar sind/ist.

Auch die zweite Lösung bietet die vorteilhafte Möglichkeit, die Einrichtung wahlweise als Heizeinrichtung mit aktiver Wärmepumpe oder als Naturkühleinrichtung mit abgeschalteter Wärmepumpe zu betreiben. Im Heizbetrieb arbeitet auch diese Einrichtung wie eine übliche Wärmepumpenheizung, wobei Wärme aus dem Erdreich oder Grundwasser oder der Umgebungsluft entnommen, auf ein höheres Temperaturniveau gehoben und zum Heizen eines Gebäudes und/oder zum Erwärmen von Brauchwasser genutzt wird. In Naturkühlbetrieb ist die Wärmepumpe außer Betrieb und nur die Förderpumpen arbeiten. Dabei nimmt das Wärmetransportfluid im zweiten Fluidkreislauf Wärme aus dem zu kühlenden Gebäude auf und transportiert zumindest in einem Teilstrom die Wärme über die zweite Zweigleitung durch den zusätzlichen Wärmetauscher. Gleichzeitig wird der Wärmetauscher von dem Wärmetransportfluid des ersten Fluidkreislaufs durchströmt, welches im Naturkühlbetrieb Wärme aus dem Wärmetransportfluid des zweiten Fluidkreislaufs aufnimmt und dann in das Erdreich oder Grundwasser oder in die Umgebungsluft transportierte. Im Erdreich oder Grundwasser oder in der Umgebungsluft wird das Wärmetransportfluid abgekühlt und dann wieder zurückgeführt, wobei zumindest ein Teil des abgekühlten Wärmetransportfluids durch die erste Zweigleitung wieder in den Wärmetauscher geleitet wird. Eine Vermischung des Wärmetransportfluids des ersten Fluidkreislaufs und des Wärmetransportfluids des zweiten Fluidkreislaufs tritt hier aufgrund des zwischengeschalteten Wärmetauscher nicht auf, so dass in den beiden Fluidkreisläufen zwei verschiedene Wärmetransportfluide verwendet werden können, beispielsweise ein Wasser-Alkohol-Gemisch im ersten Fluidkreislauf und Wasser im zweiten Fluidkreislauf. Für die Naturkühlfunktion benötigt diese Einrichtung vorteilhaft nur den zusätzlichen Wärmetauscher und zwei Zweigleitungen und wenigstens ein Absperrorgan in einer der Zweigleitungen. Auch hier ist für die zusätzlichen Teile nur ein relativ geringer zusätzlicher technischer Aufwand erforderlich, was die Herstellungskosten auch für diese Heiz- und Kühleinrichtung niedrig hält. Zudem sind auch hier die zusätzlichen Teile keine Verschleißteile, was einen zuverlässigen Dauerbetrieb gewährleistet.

Um die Heiz- und Kühlfunktionen der vorstehend beschriebenen Heiz- und Kühleinrichtungen ohne manuellen Eingriff von einer elektrischen oder elektronischen Regeleinheit regeln lassen zu können, ist bevorzugt in jeder absperrbaren Verbindungsleitung oder in jeder absperrbaren Zweigleitung ein fernbetätigbares Ventil vorgesehen.

Damit im Naturkühlbetrieb eine gewünschte Soll-Temperatur selbsttätig eingehalten werden kann, ist zweckmäßig in wenigstens einer der Verbindungsleitungen oder in wenigstens einer der Zweigleitungen jeweils ein Thermostatventil vorgesehen.

Eine dritte Lösung der oben gestellten Aufgabe gelingt erfindungsgemäß mit einer Heiz- und Kühleinrichtung der eingangs genannten Art, wobei die Wärmepumpe einen ein Kältemittel verdichtenden und umwälzenden Verdichter und zwei als Kondensator bzw. Verdampfer wirkende Wärmetauscher aufweist, welche dadurch gekennzeichnet ist, dass eine erste Kältemittelleitung, die mit dem ersten Wärmetauscher verbunden ist, wahlweise mit dem Einlass oder dem Auslass des Verdichters verbindbar ist und dass eine zweite Kältemittelleitung, die mit dem zweiten Wärmetauscher verbunden ist, wahlweise mit dem Auslass oder dem Einlass des Verdichters verbindbar ist.

Bei dieser dritten Heiz- und Kühleinrichtung wird mit technisch sehr einfachen Mitteln ein Reversierbetrieb der Wärmepumpe der Einrichtung ermöglicht. Auf diese Weise kann die Einrichtung wahlweise als aktive Heizeinrichtung oder als aktive Kühleinrichtung betrieben werden. Vorteilhaft wird mit dieser Einrichtung eine besonders hohe Kühlleistung ermöglicht, was insbesondere für Einsätze der Heiz und Kühleinrichtung in warmen Gegenden wichtig ist. Als zusätzliche Teile werden hier lediglich in ihrer Zuordnung zum Einlass und Auslass der Wärmepumpe umschaltbare Kältemittelleitungen benötigt. Auch hier ist also für die zusätzlichen Teile nur ein relativ geringer zusätzlicher technischer Aufwand erforderlich, was die Herstellungskosten auch für diese Heiz- und Kühleinrichtung niedrig hält.

Ein weiterer Beitrag zu einer zuverlässigen Funktion bei geringem technischen Aufwand wird für die vorstehend beschriebene Einrichtung dadurch erreicht, dass vorzugsweise für das wahlweise Verbinden der ersten und der zweiten Kältemittelleitung mit dem Einlass oder dem Auslass des Verdichters ein einziges Vierwege-Umkehrventil vorgesehen ist.

Um bei dieser Heiz- und Kühleinrichtung das Umschalten zwischen Heizbetrieb und Kühlbetrieb durch eine automatische Regelung zu ermöglichen, ist bevorzugt das Vierwege-Umkehrventil ein fernbetätigbares Ventil.

Ein maßgeblicher Kostenfaktor bei der Errichtung von Heiz- und Kühleinrichtungen ist der Aufwand, den der Installateur am Ort der Aufstellung der Einrichtung hat. Um diesen Aufwand für den vor Ort tätigen Installateur möglichst gering zu halten, schlägt die Erfindung vor, dass die Komponenten der Heiz- und Kühleinrichtung, insbesondere die Wärmepumpe mit Verdichter, Kondensator, Expansionsventil und Verdampfer, wenigstens eine der, bevorzugt beide, Förderpumpen, ggf. der zusätzliche Wärmetauscher, die Verbindungsleitungen oder Zweigleitungen und die Ventile, in einem vorgefertigten Modul zusammengefasst sind, welches einerseits Leitungsanschlüsse für den ersten Fluidkreislauf zu einer Erdsonde oder Grundwassersonde oder einem Luftwärmetauscher und andererseits Anschlüsse für den zweiten Fluidkreislauf zumindest zu einem Heiz- und Kühlkreis eines Gebäudes aufweist. Durch die Anordnung aller wesentlichen Komponenten der Heiz- und Kühleinrichtung in dem vorgefertigten Modul muss der Installateur vor Ort nur noch wenige Anschlüsse herstellen, insbesondere die Vor- und Rücklaufanschlüsse zu dem ersten und zu dem zweiten Fluidkreislauf. Zweckmäßig umfasst das Modul auch eine zugehörige elektrische oder elektronische Regeleinheit, welche die Einrichtung in gewünschter Weise im Betrieb regelt. Zusätzlich zu den Anschlüssen für die beiden Fluidkreisläufe muss dann in der Regel nur noch ein Anschluss an das elektrische Versorgungsnetz erfolgen, um die Heiz- und Kühleinrichtung betriebsfähig zu machen. Vorzugsweise umfasst das Modul auch ein die darin integrierten Komponenten einschließendes Gehäuse, welches in seinem Inneren einen Tragrahmen zur Anbringung und Halterung der einzelnen Komponenten besitzt. Außerdem kann das Modul, insbesondere dessen Gehäuse, mit einer Schalldämmung ausgestattet sein, um die Geräuschemissionen der Einrichtung gering zu halten.

Eine weitere erfindungsgemäße Maßnahme zur Vereinfachung der Arbeit des Installateurs vor Ort bei der Aufstellung der Heiz- und Kühleinrichtung und zur Vermeidung von Anschlussfehlern besteht darin, dass vorzugsweise die dem ersten Fluidkreislauf zugeordneten Komponenten des Moduls auf der einen Seite und die dem zweiten Fluidkreislauf zugeordneten Komponenten des Moduls auf der anderen Seite einer gedachten vertikalen Mittelebene des Moduls angeordnet sind. Das Modul erhält so einen logischen und klaren Aufbau, der für den vor Ort tätigen Installateur klar ersichtlich und leicht verständlich ist, was Anschlussfehler oder sonstige Fehler bei der Installation weitestgehend ausschließt.

Unter bestimmten Gegebenheiten kann es technisch günstiger sein, die Förderpumpe des ersten Fluidkreislaufs nicht im Modul anzuordnen, sondern sie alternativ räumlich der Erdsonde oder der Grundwassersonde oder dem Luftwärmetauscher zuzuordnen. Im Fall einer Erdsonde oder Grundwassersonde ist die Förderpumpe dann bevorzugt an einem Bohrlochkopf angeordnet, um eine wirksame Zirkulation des Wärmetransportfluids durch die Sonde innerhalb des Bohrlochs zu gewährleisten.

Zusätzlich zu den vorstehend schon erwähnten Komponenten kann zur Erhöhung der Integrationsdichte des Moduls in diesem jeweils ein dem ersten und dem zweiten Fluidkreislauf zugeordneter Luftabscheider mit Luftableiter und Sicherheitsventil angeordnet sein.

Eine weitere Erhöhung der Integrationsdichte des Moduls ergibt sich, wenn im Modul jeweils ein dem ersten und dem zweiten Fluidkreislauf zugeordnetes Ausdehnungsgefäß angeordnet ist.

Für eine Funktion mit hohem Wirkungsgrad ist eine hohe Sauberkeit der von den Wärmetransportfluiden durchströmten Teile der Einrichtung wichtig. In diesem Zusammenhang schlägt die Erfindung vor, dass im Modul jeweils wenigstens ein dem ersten und dem zweiten Fluidkreislauf zugeordneter Schmutzfilter oder -fänger angeordnet ist.

Wegen der besonders einfachen Möglichkeit ihrer Reinigung sind die Schmutzfilter bevorzugt Kugelhahnfilter.

Unter ungünstigen Umständen kann es vorkommen, dass die Leistung der Wärmepumpe im Heizbetrieb nicht ausreicht. Um auch solchen ungünstigen Umständen Rechnung zu tragen, ist zweckmäßig im Modul ein dem zweiten Fluidkreislauf zugeordneter Elektroheizeinsatz angeordnet.

Um die Möglichkeit zu schaffen, in einem Solarkollektor gewonnene Sonnenenergie nutzbar zu machen, ist erfindungsgemäß vorgesehen, dass im Modul dem zweiten Fluidkreislauf zugeordnete Anschlüsse für die Anbindung eines Solarkollektors angeordnet sind. Somit ist das Modul für den Anschluss eines Solarkollektors bereits vorbereitet. Da die im Modul vorgesehenen Anschlüsse für die Einbindung des Solarkollektors keinen großen Aufwand erfordern, können sie standardmäßig vorgesehen werden. Je nach Auslegung der Einrichtung und Eignung des Aufstellungsortes für die Gewinnung von Wärme mittels eines Solarkollektors kann die Heiz- und Kühleinrichtung wahlweise ohne Solarkollektor oder mit einem Solarkollektor ausgeführt werden. Auch eine spätere, nachträgliche Anbindung eines Solarkollektors bleibt so einfach möglich. Aufgrund der vorbereiteten Anschlüsse werden auch hier Fehlerquellen beim Anschluss eines Solarkollektors weitestgehend vermieden.

Im Folgenden werden Ausführungsbeispiele der Erfindung anhand einer Zeichnung erläutert. Die Figuren der Zeichnung zeigen:
- Figur 1: eine erste Heiz- und Kühleinrichtung in einem schematischen hydraulischen Schaltbild,
- Figur 2: eine zweite Heiz- und Kühleinrichtung in gleicher Darstellung,
- Figur 3: eine dritte Heiz- und Kühleinrichtung in gleicher Darstellung und
- Figur 4: eine vierte Heiz- und Kühleinrichtung, wieder in gleicher Darstellung.

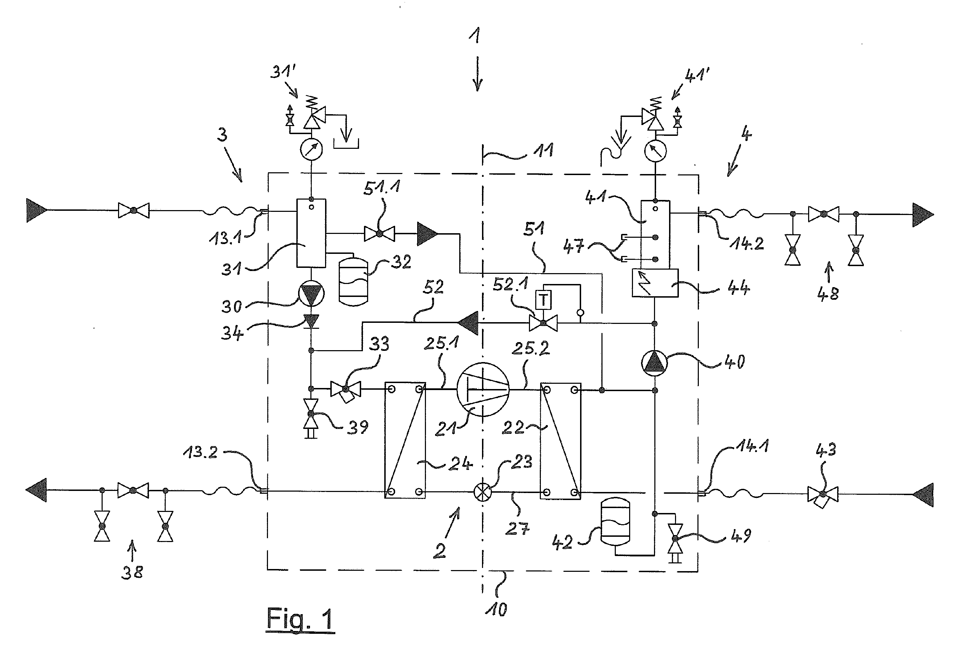

In Figur 1 ist eine erste Heiz- und Kühleinrichtung 1 in einem schematischen hydraulischen Schaltbild dargestellt. Kern der Einrichtung ist eine Wärmepumpe 2, die, wie üblich, aus einem Verdichter 21, einem Kondensator 22 in Form eines ersten Wärmetauschers, einem Expansionsventil 23 und einem Verdampfer 24 in Form eines zweiten Wärmetauschers besteht. Die Verbindung zwischen den einzelnen Teilen der Wärmepumpe 2 für das darin zirkulierende Kältemittel wird über eine erste und zweite Kältemittelleitung 25.1 und 25.2 sowie eine weitere Kältemittelleitung 27 hergestellt.

Weiterhin weist die Heiz- und Kühleinrichtung 1 einen ersten Fluidkreislauf 3 auf, der auf der in Figur 1 linken Hälfte links von einer gedachten vertikalen Mittelebene 11 der Einrichtung 1 angeordnet ist. Von einer in Figur 1 nicht dargestellten Erdsonde oder Grundwassersonde oder einem Luftwärmetauscher kommend wird ein Wärmetransportfluid, hier zum Beispiel Wasser, im ersten Fluidkreislauf 3 über einen ersten Anschluss 13.1 in das Modul 10 geführt und gelangt dort zunächst in einen Luftabscheider 31. Dem Luftabscheider 31 ist eine Sicherheitsgruppe 31' mit einem Luftabscheider und einem Sicherheitsventil zugeordnet, die aus dem Modul 10 herausgeführt sind. Mit dem Luftabscheider 31 ist weiterhin ein Ausdehnungsgefäß 32 verbunden, welches thermische Volumenänderungen des Wärmetransportfluids im ersten Fluidkreislauf 3 aufnimmt.

In Strömungsrichtung des ersten Fluidkreislaufs 3 hinter dem Luftabscheider 31 ist hier eine erste Förderpumpe 30 angeordnet, die für die Förderung des Wärmetransportfluids im ersten Fluidkreislauf 3 sorgt. Die erste Förderpumpe 30 kann alternativ auch der Erdsonde oder der Grundwassersonde oder dem Luftwärmetauscher räumlich zugeordnet sein.

Ein hinter der ersten Förderpumpe 30 angeordneter Rückflussverhinderer 34 sorgt für eine eindeutige und einzige Strömungsrichtung des Wärmetransportfluids. Weiter folgt dann in Strömungsrichtung des ersten Fluidkreislaufs 3 ein Schmutzfilter 33, hier in Form eines Kugelhahnfilters. Daran schließt sich der Verdampfer 24 als Wärmetauscher der Wärmepumpe 2 an, in welchem im Heizbetrieb der Einrichtung 1 Wärme aus dem ersten Fluidkreislauf 3 im Wärmetausch an das Kältemittel übertragen wird. Nach Durchströmen des Verdampfers 24 gelangt das Wärmetransportfluid im ersten Fluidkreislauf 3 über den Anschluss 13.2 an einer Füll- und Entlüftungseinrichtung 38 vorbei wieder zu der Erdsonde oder Grundwassersonde oder dem Luftwärmetauscher. Zum bedarfsweisen Entleeren des ersten Fluidkreislaufs 3 dient ein im Modul 10 zwischen dem Rückflussverhinderer 34 und dem Schmutzfilter 33 abzweigendes Entleerungsventil 39.

Rechts in Figur 1 ist ein zweiter Fluidkreislauf 4 dargestellt, in welchem im vorliegenden Beispiel das gleiche Wärmetransportfluid zirkuliert wie im ersten Fluidkreislauf 3. Im zweiten Fluidkreislauf 4 gelangt das Wärmetransportfluid von einem oder mehreren Fußboden- oder Wand- oder Deckenheizkörpern und/oder von einem Brauchwassererhitzter über einen Schmutzfilter 43, auch hier ein Kugelhahnfilter, und über einen ersten Anschluss 14.1 in das Modul 10. Hier durchströmt das Wärmetransportfluid zunächst den Kondensator 22, wo das Wärmetransportfluid im Heizbetrieb der Einrichtung 1 durch das verdichtete Kältemittel im Wärmetausch erwärmt wird. Hinter dem Kondensator 22 folgt in Strömungsrichtung des zweiten Fluidkreislaufs 4 eine zweite Förderpumpe 40, die für die Zirkulation des Wärmetransportfluids im zweiten Fluidkreislauf 4 sorgt. Im weiteren Verlauf folgt dann ein Elektroheizeinsatz 44, der für eine bedarfsweise Nacherwärmung des Wärmetransportfluids im zweiten Fluidkreislauf 4 sorgt. An den Elektroheizeinsatz 44 schließt sich ein Luftabscheider 41 an, dem auch wieder eine aus dem Modul 10 herausgeführte Sicherheitsgruppe 41' zugeordnet ist, die auch hier einen Luftableiter und ein Sicherheitsventil umfasst. Von dem Luftabscheider 41 führt der zweite Fluidkreislauf 4 über einen zweiten Anschluss 14.2 aus dem Modul 10 heraus und über eine Füll- und Entlüftungseinrichtung 38 wieder zu einem oder mehreren Fußboden- oder Wand- oder Deckenheizkörpern und/oder zu einem Brauchwassererhitzer.

Auch dem zweiten Fluidkreislauf 4 ist ein hier unten rechts im Modul 10 angeordnetes Ausdehnungsgefäß 42 zugeordnet. Zum Füllen und Entlüftung des zweiten Fluidkreislaufs dient die unten rechts in Figur 1 außerhalb des Moduls 10 angeordnete Füll- und Entlüftungseinrichtung 48. Zum bedarfsweisen Entleeren des zweiten Fluidkreislaufs 4 dient ein Entleerungsventil 49 unten rechts im Modul 10.

Am Luftabscheider 41 des zweiten Fluidkreislaufs 4 sind zwei Leitungsanschlüsse 47 vorgesehen, welche zur Anbindung eines Solarkollektors dienen, bei dem Ausführungsbeispiel nach Figur 1 aber nicht genutzt sind.

Im Heizbetrieb der Einrichtung 1 wird in dem ersten Fluidkreislauf 3 enthaltene Wärme, die aus dem Erdreich oder dem Grundwasser oder der Umgebungsluft stammt, mittels der Wärmepumpe 2 auf ein höheres Temperaturniveau angehoben und an das im zweiten Fluidkreislauf 4 zirkulierende Wärmetransportfluid übertragen.

In einer zweiten Betriebsweise kann die Einrichtung 1 als Naturkühleinrichtung genutzt werden. In dieser Betriebsweise sind die Wärmepumpe 2 mit ihrem Verdichter 21 und die erste Förderpumpe 30 stillgesetzt, nur die zweite Förderpumpe 30 ist in Betrieb. Für diesen Kühlbetrieb sind zwei Verbindungsleitungen 51 und 52 zusätzlich vorgesehen. Die erste Verbindungsleitung 51 zweigt stromauf der ersten Förderpumpe 30, hier vom Luftabscheider 31, aus dem ersten Fluidkreislauf 3 ab und mündet stromauf der zweiten Förderpumpe 40 in den zweiten Fluidkreislauf 4. Die zweite Verbindungsleitung 52 zweigt stromab der zweiten Förderpumpe 40 aus dem zweiten Fluidkreislauf 4 ab und mündet stromab der ersten Förderpumpe 30 und stromab des zugehörigen Rückflussverhinderers 34 in den ersten Fluidkreislauf 3. Weiterhin ist in der ersten Verbindungsleitung 51 ein Ventil 51.1 angeordnet, das zweckmäßig fernbetätigbar ist. In der zweiten Verbindungsleitung 52 ist ein Thermostatventil 52.1 angeordnet, welches abhängig von der Temperatur auf der Zulaufseite des Thermostatventil 52.1 verstellt wird. Dabei führt eine zunehmende Temperatur auf der Zustromseite des Thermostatventils 52.1 zu einem zunehmenden Öffnen des Thermostatventils 52.1 und umgekehrt.

Bei in Betrieb befindlicher Förderpumpe 40 gelangt ein Teilstrom des Wärmetransportfluids aus dem zweiten Fluidkreislauf 4 nach Aufnahme von Wärme aus einem zu kühlenden Gebäude über das Thermostatventil 52.1 durch die Verbindungsleitung 52 in den ersten Fluidkreislauf 3. Dort wird der überführte Teilstrom in den ersten Fluidkreislauf 3 eingeleitet und dieser gelangt insgesamt über den hier nicht wirksamem Verdampfer 24 und den Anschluss 13.2 zur Erdsonde oder Grundwassersonde oder zum Luftwärmetauscher. Dort gibt das Wärmetransportfluid Wärme an das Erdreich oder das Grundwasser oder die Umgebungsluft ab und strömt mit verminderter Temperatur durch den Anschluss 13.1 zurück zum Modul 10. Aus dem Luftabscheider 31 wird wieder ein Teilstrom des Wärmetransportfluids aus dem ersten Fluidkreislauf 3 über das offene Ventil 51.1 durch die erste Verbindungsleitung 51 zum zweiten Fluidkreislauf 4 geführt und zwar zur Saugseite der Förderpumpe 40. Somit gelangt gekühltes Wärmetransportfluid durch den hier nicht aktiven Elektroheizeinsatz 44, den Luftabscheider 41 und den Anschluss 14.2 zu dem nicht dargestellten Boden- oder Wand- oder Deckenheizkörper im zu kühlenden Gebäude.

Die Begrenzung des Moduls 10 ist in Figur 1 rein schematisch durch eine unterbrochene Linie dargestellt. In der Realität umfasst das Modul 10 zweckmäßig einen die darin vorgesehenen Komponenten tragenden Tragrahmen sowie ein das Modul 10 nach außen abschließendes, abnehmbares oder zu öffnendes Gehäuse.

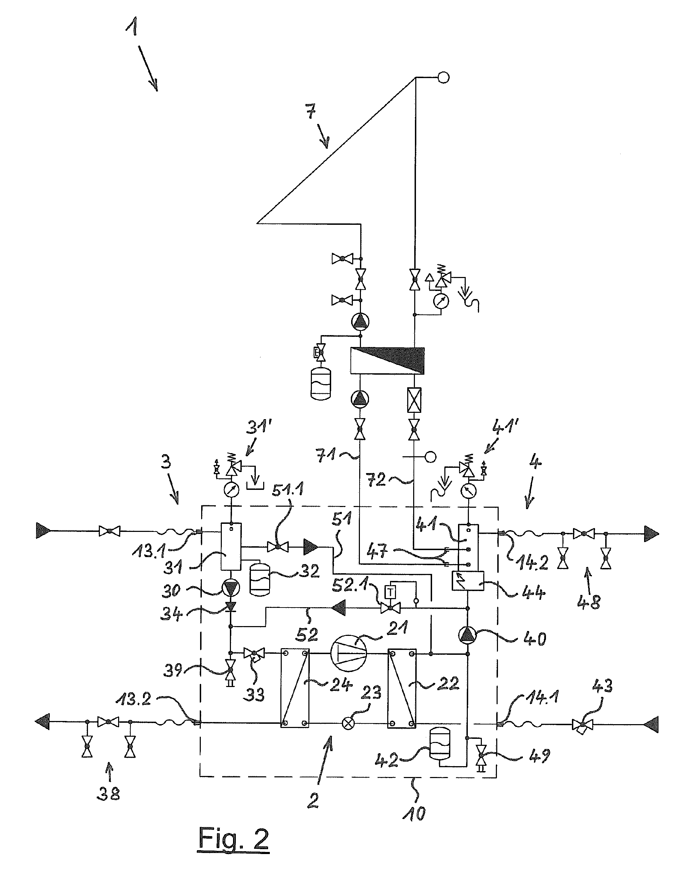

Figur 2 zeigt eine Heiz- und Kühleinrichtung 1, die der Einrichtung 1 in Figur 1 im Wesentlichen entspricht, aber nun um einen Solarkollektor 7 ergänzt ist. Der Solarkollektor 7 ist beispielsweise auf einer geneigten Dachfläche eines zugehörigen Gebäudes angeordnet und verfügt über Anbindungsleitungen 71 und 72, die mit den Leitungsanschlüssen 47 am Luftabscheider 41 des zweiten Fluidkreislaufs 4 verbunden sind. Weiterhin verfügt der Solarkollektor 7 über die üblichen weiteren Komponenten, wie Förderpumpen, Wärmetauscher, Ausdehnungsgefäß, Sicherheitsgruppe, Schmutzfilter, Füll- und Entlüftungseinrichtung sowie Absperrventile, die hier nicht weiter erläutert werden müssen. Mittels des Solarkollektors 7 wird Solarenergie in den zweiten Fluidkreislauf 4 eingespeist, wobei diese Energieeinspeisung aus dem Solarkollektor 7 sowohl bei arbeitender als auch bei still stehender Wärmepumpe 2 möglich ist und was mit einer geeigneten Regelung automatisch regelbar ist. Hinsichtlich der weiteren Einzelheiten und Funktionen der Heiz- und Kühleinrichtung 1 gemäß Figur 2 wird auf die Beschreibung der Figur 1 verwiesen.

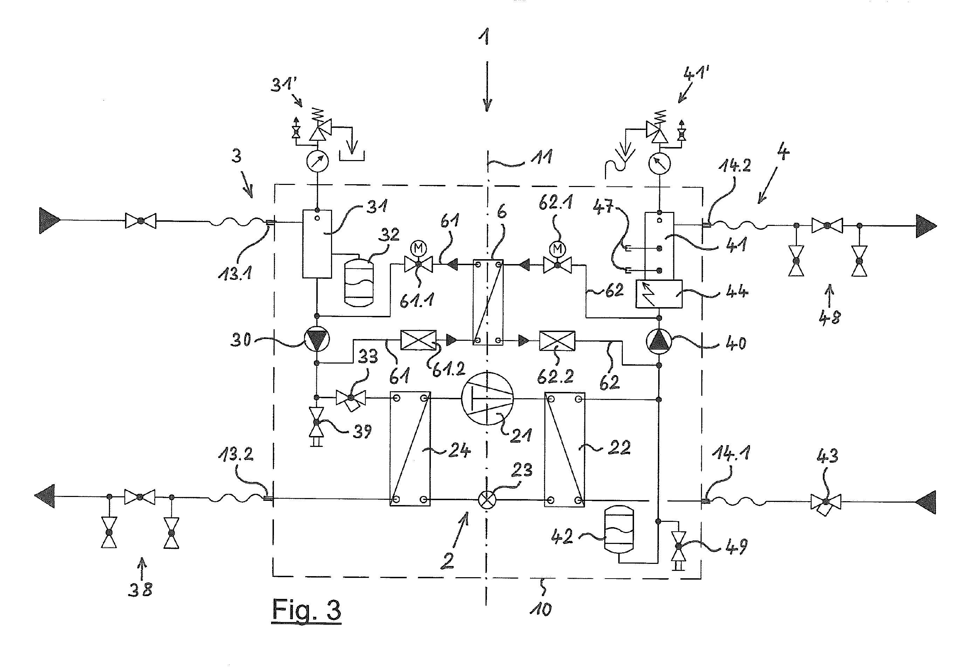

Figur 3 zeigt eine dritte Heiz- und Kühleinrichtung 1, die hinsichtlich des Heizbetriebes identisch mit der Heiz- und Kühleinrichtung 1 gemäß Figur 1 aufgebaut ist. Auch die Einrichtung 1 gemäß Figur 3 besitzt eine Wärmepumpe 2 mit Verdichter 21, Kondensator 22, Expansionsventil 23 und Verdampfer 24. Auch die beiden Fluidkreisläufe 3 und 4 sind entsprechend dem Beispiel nach Figur 1 aufgebaut, auf deren Beschreibung verwiesen wird.

Auch die Heiz- und Kühleinrichtung 1 nach Figur 3 kann zusätzlich zum Heizbetrieb auch in einer Betriebsweise für Naturkühlung genutzt werden. Hierzu besitzt die Einrichtung 1 einen zusätzlichen Wärmetauscher 6, der mit den beiden Fluidkreisläufen 3 und 4 verbunden ist. Eine erste Zweigleitung 61 zweigt stromab der ersten Förderpumpe 30 des ersten Fluidkreislaufs 3 aus diesem ab und führt über einen Schmutzfilter 61.2 zum Wärmetauscher 6 und von diesem über ein Ventil 61.1 stromauf der ersten Förderpumpe 30 einmündend zum ersten Fluidkreislauf 3 zurück. Eine zweite Zweigleitung 62 zweigt stromab der zweiten Förderpumpe 40 im zweiten Fluidkreislauf 4 aus diesem ab, führt über ein zweites Ventil 62.1 zum Wärmetauscher 6 und von diesem über ein Schmutzfilter 62.2 stromauf der Förderpumpe 40 einmündend wieder in den zweiten Fluidkreislauf 4 zurück.

Im Heizbetrieb arbeitet die Einrichtung 1 gemäß Figur 3 in gleicher Weise wie die Einrichtung 1 gemäß Figur 1; auf deren diesbezügliche Beschreibung wird verwiesen.

Neben dem Heizbetrieb kann die Einrichtung 1 nach Figur 3 auch in einem Naturkühlbetrieb eingesetzt werden. In dieser zweiten Betriebsweise ist die Wärmepumpe 2 stillgesetzt, jedoch sind die beiden Förderpumpe 30 und 40 in Betrieb. Außerdem sind im Kühlbetrieb die fernbetätigbaren Ventile 61.1 und 62.1 geöffnet. Über den Anschluss 14.1 gelangt in einem zu kühlenden Gebäude erwärmtes Wärmetransportfluid in das Modul 10, durchströmt den nun funktionslosen Kondensator 22 und gelangt zur Saugseite der Förderpumpe 40. Auf der Druckseite der Förderpumpe 40 zweigt aus dem zweiten Fluidkreislauf 4 die Zweigleitung 62 ab, durch welche ein Teilstrom des Wärmetransportfluids über das offene Ventil 62.1 zum Wärmetauscher 6 geführt wird. Nach Durchströmen des Wärmetauschers 6 fließt der Teilstrom des Wärmetransportfluids durch den rückführenden Teil der zweiten Zweigleitung 62 über ein erstes von Hand voreinstellbares Ventil 62.2 stromauf der zweiten Förderpumpe 40 wieder in den zweiten Fluidkreislauf 4. Ein Teil der im Wärmetransportfluid des zweiten Fluidkreislaufs 4 herangeführten Wärme wird im Wärmetauscher 6 an das Wärmetransportfluid des ersten Fluidkreislaufs 3 übertragen. Hierzu zweigt aus dem ersten Fluidkreislauf 3 stromab der ersten Förderpumpe 30 die erste Zweigleitung 61 ab, die über ein zweites von Hand voreinstellbares Ventil 61.2 zum Wärmetauscher 6 führt. Vom Wärmetauscher 6 führt der rückführende Teil der ersten Zweigleitung 61 über das Ventil 61.1 wieder zum ersten Fluidkreislauf 3, in welchen die erste Zweigleitung 61 stromauf der Förderpumpe 30 einmündet. Auf diese Weise wird ein Teilstrom des ersten Wärmetransportfluids durch den zusätzlichen Wärmetauscher 6 geführt, wodurch Wärme aus dem zweiten Fluidkreislauf 4 in den ersten Fluidkreislauf 3 übertragen wird. Diese Wärme wird mit dem ersten Fluidkreislauf 3 in das Erdreich oder das Grundwasser oder die Umgebungsluft abgegeben. Durch die von Hand voreinstellbaren Ventile 61.2 und 62.2 kann eine geeignete Einstellung der Teilströme vorgenommen werden.

Durch den Wärmetauscher 6 sind die Fluidkreisläufe 3 und 4 hinsichtlich ihrer Wärmetransportfluide fluidisch voneinander getrennt, sodass zwei verschiedene Wärmetransportfluide einsetzbar sind, z.B. ein Wasser-Alkohol-Gemisch im ersten Fluidkreislauf 3 und Wasser im zweiten Fluidkreislauf 4.

Auch bei der Heiz- und Kühleinrichtung 1 nach Figur 3 sind an dem Luftabscheider 41 im zweiten Fluidkreislauf 42 Leitungsanschlüsse 47 vorgesehen, die zur Anbindung eines Solarkollektors dienen, hier aber nicht genutzt sind.

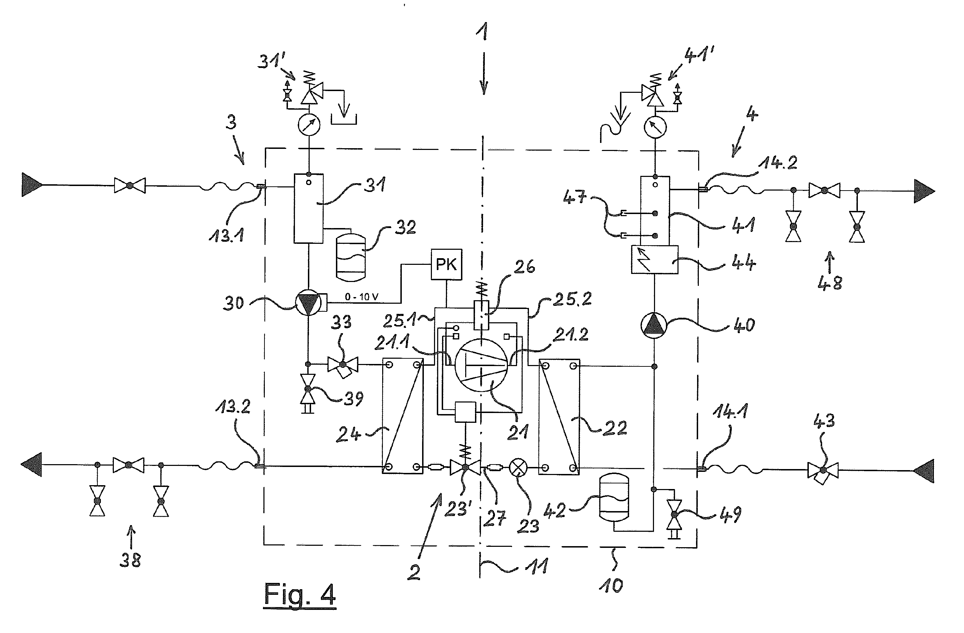

Figur 4 schließlich zeigt eine Heiz- und Kühleinrichtung 1, bei der die Wärmepumpe 2 sowohl im Heizbetrieb als auch im Kühlbetrieb aktiv ist. Zu diesem Zweck ist die Wärmepumpe 2 als reversible Wärmepumpe ausgeführt, was bedeutet, dass sie in zwei Richtungen arbeiten kann. Die beiden Fluidkreisläufe 3 und 4 sind hier identisch mit den Fluidkreisläufen der zuvor beschriebenen Einrichtungen 1 gemäß den Figuren 1 bis 3 ausgeführt; auf deren diesbezügliche Beschreibung wird verwiesen. Zur Ermöglichung des reversiblen Betriebes sind bei dem Beispiel gemäß Figur 4 eine erste Kältemittelleitung 25.1 und eine zweite Kältemittelleitung 25.2 sowie ein Vierwege-Umkehrventil 26 vorgesehen. Die erste Kältemittelleitung 25.1 verbindet den Verdampfer 24 mit dem Umkehrventil 26; die zweite Kältemittelleitung 25.2 verbindet den Kondensator 22 mit dem Umkehrventil 26. Gleichzeitig ist das Umkehrventil 26 über zwei weitere Leitungen mit dem Einlass 21.1 und mit dem Auslass 21.2 des Verdichters 21 verbunden. In einer ersten Stellung des Umkehrventils 26 arbeitet die Wärmepumpe 2 in einer ersten Richtung im Heizbetrieb, in einer zweiten Stellung des Umkehrventils 26 arbeitet die Wärmepumpe 2 in umgekehrter Richtung im Kühlbetrieb.

Im Heizbetrieb mit der entsprechenden Stellung des Umkehrventils 26 ist der Einlass 21.1 des Verdichters 21 mit dem Verdampfer 24 verbunden und der Auslass 21.2 des Verdichters 21 ist mit dem Kondensator 22 verbunden. Bei arbeitendem Verdichter 21 und arbeitenden Förderpumpen 30 und 40 wird auch hier mittels des ersten Fluidkreislaufs 3 Wärme aus dem Erdreich oder dem Grundwasser oder der Umgebungsluft entnommen und mittels der Wärmepumpe 2 auf ein höheres Temperaturniveau angehoben. Diese Wärme mit dem höheren Temperaturniveau wird im Kondensator 22 an das Wärmetransportfluid im zweiten Fluidkreislauf 4 übertragen und dann für Heizzwecke genutzt.

Für den bei der Einrichtung 1 nach Figur 4 möglichen aktiven Kühlbetrieb wird das Vierwege-Umkehrventil 26 in seiner Stellung umgeschaltet. Hierdurch wird die erste Kältemittelleitung 25.1 mit dem Auslass 21.2 des Verdichters 21 und die zweite Kältemittelleitung 25.2 mit dem Einlass 21.1 des Verdichters 21 verbunden. Durch diese Umschaltung wird nun eine umgekehrte Arbeitsrichtung der Wärmepumpe 2 bewirkt. In diesem Betrieb wird Wärme, die dem Kondensator 22 zugeführt wird, auf ein höheres Temperaturniveau angehoben und dem Verdampfer 24 zugeführt, wobei nun aber die Funktionen von Kondensator 22 und Verdampfer 24 getauscht sind. Der Kondensator 22 arbeitet im Kühlbetrieb also als Verdampfer, der Verdampfer 24 arbeitet nun als Kondensator. Da der Kondensator 22 und der Verdampfer 24 untereinander identisch ausgeführt sein können, ist diese Funktionsumkehr problemlos möglich.

Aus einem zu kühlenden Gebäude stammende Wärme wird zunächst mit dem Wärmetransportfluid des zweiten Fluidkreislaufs 4 über den Anschluss 14.1 zum Modul 10 geführt und im nun als Verdampfer wirkenden Kondensator 23 an das in der Wärmepumpe 2 zirkulierende Kältemittel übertragen. Aus dem als Verdampfer wirkenden Kondensator 22 gelangt das Kältemittel zum Einlass 21.1 des Verdichters 21 und wird unter erhöhtem Druck und mit einem erhöhten Temperaturniveau dem nun als Kondensator wirkenden Verdampfer 24 zugeführt. Dort wird die Wärme in Wärmetausch an das Wärmetransportfluid des ersten Fluidkreislaufs 3 übertragen und mit dem Wärmetransportfluid über den Anschluss 13.2 in das Erdreich oder Grundwasser oder die Umgebungsluft abgeführt und an diese abgegeben.

Zur Regelung der Heiz- und Kühleinrichtung 1 gemäß Figur 4 ist hier die Leistung der ersten Förderpumpe 30 in Abhängigkeit von an der Wärmepumpe 2 erfassten Parametern regelbar. Außerdem ist in Reihe mit dem Expansionsventil 23 ein nach Maßgabe von Parametern der Wärmepumpe 2 verstellbares Kältemittelventil 23' in die weitere Kältemittelleitung 27 zwischen Kondensator 22 und Verdampfer 24 eingeschaltet.

### Bezugszeichenliste:

| Zeichen | Bezeichnung |
|---|---|
| 1 | Heiz- und Kühleinrichtung |
| 10 | Modul |
| 11 | gedachte vertikale Mittelebene |
| 13.1, 13.2 | Anschlüsse für 3 |
| 14.1, 14.2 | Anschlüsse für 4 |
| | |
| 2 | Wärmepumpe |
| 21 | Verdichter |
| 21.1 | Einlass |
| 21.2 | Auslass |
| 22 | Kondensator |
| 23 | Expansionsventil |
| 23' | Kältemittelventil |
| 24 | Verdampfer |
| 25.1, 25.2 | erste, zweite Kältemittelleitung |
| 26 | Vierwege-Umkehrventil |
| 27 | weitere Kältemittelleitung |
| | |
| 3 | erster Fluidkreislauf |
| 30 | erste Förderpumpe |
| 31 | Luftabscheider |
| 31' | Sicherheitsgruppe |
| 32 | Ausdehnungsgefäß |
| 33 | Schmutzfilter oder -fänger |
| 34 | Rückflussverhinderer |
| 38 | Füll- und Entlüftungseinrichtung |
| 39 | Entleerungsventil |
| 4 | zweiter Fluidkreislauf |
| 40 | zweite Förderpumpe |
| 41 | Luftabscheider |
| 41' | Sicherheitsgruppe |
| 42 | Ausdehnungsgefäß |
| 43 | Schmutzfilter oder -fänger |
| 45 | Elektroheizeinsatz |
| 47 | Anschlüsse für 7 |
| 48 | Füll- und Entlüftungseinrichtung |
| 49 | Entleerungsventil |
| | |
| 51 | erste Verbindungsleitung |
| 52 | zweite Verbindungsleitung |
| 51.1 | Ventil in 51 |
| 52.1 | Thermostatventil in 52 |
| | |
| 6 | Wärmetauscher |
| 61 | erste Zweigleitung |
| 62 | zweite Zweigleitung |
| 61.1 | Ventil in 61 |
| 61.2 | Ventil in 61 |
| 62.1 | Ventil in 62 |
| 62.2 | Ventil in 62 |
| | |
| 7 | Solarkollektor |
| 71, 72 | Anbindungsleitungen |

## Patentansprüche

1. Heiz- und Kühleinrichtung (1) mit einer Wärmepumpe (2) mit einem im Heizbetrieb Wärme aus der Umgebung aufnehmenden und im Kühlbetrieb Wärme an die Umgebung abgebenden ersten Fluidkreislauf (3) mit einer ersten Förderpumpe (30) und mit einem im Heizbetrieb Wärme an ein zu beheizendes Gebäude abgebenden und im Kühlbetrieb Wärme aus einem zu kühlenden Gebäude entnehmenden zweiten Fluidkreislauf (4) mit einer zweiten Förderpumpe (40),
**dadurch gekennzeichnet,**
**dass** in beiden Fluidkreisläufen (3 und 4) das gleiche Wärmetransportfluid zirkuliert und dass die beiden Fluidkreisläufe (3 und 4) über eine erste und eine zweite Verbindungsleitung (51, 52) miteinander verbunden sind, wobei die erste Verbindungsleitung (51) stromauf der ersten Förderpumpe (30) von dem ersten Fluidkreislauf (3) abzweigt und stromauf der zweiten Förderpumpe (40) in den zweiten Fluidkreislauf (4) mündet und wobei die zweite Verbindungsleitung (52) stromab der zweiten Förderpumpe (40) von dem zweiten Fluidkreislauf (4) abzweigt und stromab der ersten Förderpumpe (30) in den ersten Fluidkreislauf (3) mündet, wobei wenigstens eine der Verbindungsleitungen (51, 52) absperrbar ist.

2. Heiz- und Kühleinrichtung (1) mit einer Wärmepumpe (2) mit einem ersten, im Heizbetrieb Wärme aus der Umgebung aufnehmenden und im Kühlbetrieb Wärme an die Umgebung abgebenden Fluidkreislauf (3) mit einer ersten Förderpumpe (30) und mit einem zweiten, im Heizbetrieb Wärme an einen zu beheizenden Raum abgebenden und im Kühlbetrieb Wärme aus einem zu kühlenden Raum entnehmenden Fluidkreislauf (4) mit einer zweiten Förderpumpe (40),
**dadurch gekennzeichnet,**
**dass** zwischen den beiden Fluidkreisläufen (3 und 4) ein Wärmetauscher (6) eingeschaltet ist, dass der erste Fluidkreislauf (3) über eine stromab der ersten Förderpumpe (30) abzweigende und stromauf der ersten Förderpumpe (30) in den ersten Fluidkreislauf (3) mündende erste Zweigleitung (61) mit der einen Seite des Wärmetauschers (6) verbunden ist und dass der zweite Fluidkreislauf (4) über eine stromab der zweiten Förderpumpe (40) abzweigende und stromauf der zweiten Förderpumpe (40) in den zweiten Fluidkreislauf (4) mündende zweite Zweigleitung (62) mit der anderen Seite des Wärmetauschers (6) verbunden ist, wobei die erste und/oder die zweite Zweigleitung (61, 62) absperrbar sind/ist.

3. Heiz- und Kühleinrichtung nach Anspruch 1 oder 2, **dadurch gekennzeichnet, dass** in jeder absperrbaren Verbindungsleitung (51, 52) oder in jeder absperrbaren Zweigleitung (61, 62) ein fernbetätigbares Ventil (51.1; 61.1, 62.1) vorgesehen ist.

4. Heiz- und Kühleinrichtung nach Anspruch 3, **dadurch gekennzeichnet, dass** in wenigstens einer der Verbindungsleitungen (51, 52) oder in wenigstens einer der Zweigleitungen (61, 62) jeweils ein Thermostatventil (52.1) vorgesehen ist.

5. Heiz- und Kühleinrichtung (1) mit einer Wärmepumpe (2) mit einem im Heizbetrieb Wärme aus der Umgebung aufnehmenden und im Kühlbetrieb Wärme an die Umgebung abgebenden ersten Fluidkreislauf (3) mit einer ersten Förderpumpe (30) und mit einem im Heizbetrieb Wärme an einen zu beheizenden Raum abgebenden und im Kühlbetrieb Wärme aus einem zu kühlenden Raum entnehmenden zweiten Fluidkreislauf (4) mit einer zweiten Förderpumpe (40), wobei die Wärmepumpe (2) einen ein Kältemittel verdichtenden und umwälzenden Verdichter (21) und zwei als Kondensator (22) bzw. Verdampfer (24) wirkende Wärmetauscher aufweist,
**dadurch gekennzeichnet,**
**dass** eine erste Kältemittelleitung (25.1), die mit dem ersten Wärmetauscher verbunden ist, wahlweise mit dem Einlass (21.1) oder dem Auslass (21.2) des Verdichters (21) verbindbar ist und dass eine zweite Kältemittelleitung (25.2), die mit dem zweiten Wärmetauscher verbunden ist, wahlweise mit dem Auslass (21.2) oder dem Einlass (21.1) des Verdichters (21) verbindbar ist.

6. Heiz- und Kühleinrichtung nach Anspruch 5, **dadurch gekennzeichnet, dass** für das wahlweise Verbinden der ersten und der zweiten Kältemittelleitung (25.1, 25.2) mit dem Einlass (21.1) oder dem Auslass (21.2) des Verdichters (21) ein einziges Vierwege-Umkehrventil (26) vorgesehen ist.

7. Heiz- und Kühleinrichtung nach Anspruch 6, **dadurch gekennzeichnet, dass** das Vierwege-Umkehrventil ein fernbetätigbares Ventil ist.

8. Heiz- und Kühleinrichtung nach einem der vorhergehenden Ansprüche, **dadurch gekennzeichnet, dass** deren Komponenten, insbesondere die Wärmepumpe (2) mit Verdichter (21), Kondensator (22), Expansionsventil (23) und Verdampfer (24), wenigstens eine der Förderpumpen (30, 40), ggf. der Wärmetauscher (6), die Verbindungsleitungen (51, 52) oder Zweigleitungen (61, 62) und die Ventile (51.1, 52.1, 61.1, 62.1), in einem vorgefertigten Modul (10) zusammengefasst sind, welches einerseits Leitungsanschlüsse (13.1, 13.2) für den ersten Fluidkreislauf (3) zu einer Erdsonde oder Grundwassersonde oder einem Luftwärmetauscher und andererseits Anschlüsse (14.1, 14.2) für den zweiten Fluidkreislauf (4) zumindest zu einem Heiz- und Kühlkreis eines Gebäudes aufweist.

9. Heiz- und Kühleinrichtung nach Anspruch 8, **dadurch gekennzeichnet, dass** die dem ersten Fluidkreislauf (3) zugeordneten Komponenten des Moduls (10) auf der einen Seite und die dem zweiten Fluidkreislauf (4) zugeordneten Komponenten des Moduls (10) auf der anderen Seite einer gedachten vertikalen Mittelebene (11) des Moduls (10) angeordnet sind.

10. Heiz- und Kühleinrichtung nach Anspruch 8 oder 9, **dadurch gekennzeichnet, dass** die Förderpumpe (30) des ersten Fluidkreislaufs (3) räumlich der Erdsonde oder der Grundwassersonde oder dem Luftwärmetauscher zugeordnet ist.

11. Heiz- und Kühleinrichtung nach Anspruch 8, 9 oder 10, **dadurch gekennzeichnet, dass** im Modul (10) jeweils ein dem ersten und dem zweiten Fluidkreislauf (3, 4) zugeordneter Luftabscheider (31, 41) mit Luftableiter und Sicherheitsventil angeordnet ist.

12. Heiz- und Kühleinrichtung nach einem der Ansprüche 8 bis 11, **dadurch gekennzeichnet, dass** im Modul (10) jeweils ein dem ersten und dem zweiten Fluidkreislauf (3, 4) zugeordnetes Ausdehnungsgefäß (32, 42) angeordnet ist.

13. Heiz- und Kühleinrichtung nach einem der Ansprüche 8 bis 12, **dadurch gekennzeichnet, dass** im Modul (10) jeweils wenigstens ein dem ersten und dem zweiten Fluidkreislauf (3, 4) zugeordneter Schmutzfilter oder -fänger (33, 43) angeordnet ist.

14. Heiz- und Kühleinrichtung nach Anspruch 13, **dadurch gekennzeichnet, dass** die Schmutzfilter (33, 43) Kugelhahnfilter sind.

15. Heiz- und Kühleinrichtung nach einem der Ansprüche 8 bis 14, **dadurch gekennzeichnet, dass** im Modul (10) ein dem zweiten Fluidkreislauf (4) zugeordneter Elektroheizeinsatz (44) angeordnet ist.

16. Heiz- und Kühleinrichtung nach einem der Ansprüche 8 bis 15, **dadurch gekennzeichnet, dass** im Modul (10) dem zweiten Fluidkreislauf (4) zugeordnete Anschlüsse (47) für die Anbindung eines Solarkollektors (7) angeordnet sind.
